# EUROPEAN PATENT SPECIFICATION

(11) **EP 2 324 220 B1**
(45) Date of publication and mention of the grant of the patent: **07.10.2015**
(21) Application number: 09806987.5
(22) Date of filing: 14.08.2009
(51) Int. Cl.: F02B 37/02, F02B 67/10, F01N 13/10, F01N 13/18

(54) **IMPROVED EXHAUST MANIFOLD TO HOUSING CONNECTION**
VERBESSERTER ANSCHLUSS ZWISCHEN ABGASKRÜMMER UND GEHÄUSE
RACCORD AMÉLIORÉ ENTRE COLLECTEUR D'ÉCHAPPEMENT ET BOÎTIER

(30) Priority: 14.08.2008 US 188917 P; 18.12.2008 US 203088 P
(43) Date of publication of application: 25.05.2011
(73) Proprietor: Flexible Metal, Inc., Chula Vista, CA 91911 (US)
(72) Inventor: SCHMIDT, Michael, Howell MI 48855 (US); PHILLIPS, Robert, Stockbridge MI 49285 (US); BLACKIE, Mike, New Hudson MI 48169 (US); STEMPIEN, Vince, Plymouth MI 48170 (US)
(74) Representative: Müller-Boré & Partner Patentanwälte PartG mbB
(86) International application number: PCT/US2009/004678
(87) International publication number: WO 2010/019268

(56) References cited:
- EP-A1- 2 075 430
- US-A- 4 008 572
- US-A- 4 537 027
- US-A- 6 082 104
- US-A- 6 155 046
- US-A1- 2005 126 163
- US-A1- 2007 289 954
- US-B1- 6 293 098

## Description

### FIELD OF THE INVENTION

The present invention generally relates to exhaust manifolds, and more particular to an apparatus and method for securing an exhaust manifold to a mating component.

### BACKGROUND OF THE INVENTION

As is well known in the art, internal welds are often utilized to create scaled connections between various automotive components, such as exhaust manifolds, turbine housings and the like. However, in many applications, internal welds are problematic for numerous reasons, such as weld spatter, warping, deformation, and the like. In addition, internal welding may be difficult, if not impossible, to perform due to limited or restricted access to the component or the size and shape of the component. For example, when integrating a manifold assembly to a turbine housing, there is usually no access for internal welding due to the size and shape and arrangement of a typical turbine housing, manifold assembly, or other various components. Therefore, a need exists in the art to provide an improved apparatus and method for providing an acceptable, durable and cost effective joint between an exhaust manifold and a mating component.

Other methods of attaching the exhaust manifold to a mating component involves the use of a double flange connection. The double flange connection typically includes at least two flanges, a gasket and fasteners to connect the components. The use of multiple components such as the double flange is costly to manufacture and time consuming to assemble. Therefore, there is a need in the art for an apparatus and method for attaching the exhaust manifold to a mating component that reduces the number of components used and reduces the manufacturing costs.

EP 2 075 430 A falls under Article 54 (3) EPC and discloses an exhaust gas collector for an exhaust system of an internal combustion engine having two internal shell bodies which each connect a plurality of inlet openings in a communicating fashion to an outlet opening, having an external shell body which encloses a receptacle space in which the two internal shell bodies are at least partially arranged. In order to improve the response behaviour of a turbocharger, which can be connected to the exhaust gas collector, a dividing wall is proposed which divides the receptacle space into two partial spaces, one of the two internal shell bodies being at least partially arranged in each of the partial spaces.

### SUMMARY

The invention provides an improved manifold to housing connection according to claim 1. Preferred embodiments are mentioned in the dependent claims.

### DESCRIPTION OF THE DRAWINGS

Objects and advantages together with the operation of the invention may be better understood by reference to the following detailed description taken in connection with the following illustrations, wherein:
FIG. 1A illustrates a perspective view of a first component secured to a second component in an not covered by the claims.
FIG. 1B illustrates a partial cut away view of FIG. 1A.
FIG. 1C illustrates a magnified view of FIG. 1B.
FIG. 2A illustrates a first component secured to a second component with a first joint and a second joint in an embodiment not covered by the claims.
FIG. 2B illustrates a partial cut away view of FIG. 2A.
FIG. 2C illustrates a close up view of FIG. 2B.
FIG. 3A illustrates a first component secured to a second component at two locations in an embodiment not covered by the claims.
FIG. 3B illustrates a partial cut away view of FIG. 3A.
FIG. 3C illustrates a close up view of FIG. 3B.
FIG. 4A illustrates a first component secured to a second component and a third component at three locations in an embodiment not covered by the claims.
FIG. 4B illustrates a partial cut away view of FIG. 4A.
FIG. 4C illustrates a close up view of FIG. 4B.
FIG. 5A illustrates a first component secured to a second component and a third component at three alternative locations in an embodiment of the present invention.
FIG. 5B illustrates a first component secured to a second component and a third component at two locations in an embodiment of the present invention.
FIG. 5C illustrates a first component secured to a second component and a third component at three alternative locations in an embodiment not covered by the claims.
FIG. 5D illustrates a first component secured to a second component and a third component at three alternative locations in an embodiment not covered by the claims.

### DETAILED DESCRIPTION

The present invention provides an improved apparatus for connecting two or more components together. For example, a joint may be formed between an exhaust manifold assembly and a mating component. The invention may be utilized to achieve an acceptable, durable and cost effective joint between two components, such as an exhaust manifold assembly and mating component. The mating component may be any appropriate type of component, such as a turbine housing, for example. The invention may also be applied to a variety of other components, including, but not limited to, tubes, flanges, castings, and the like.

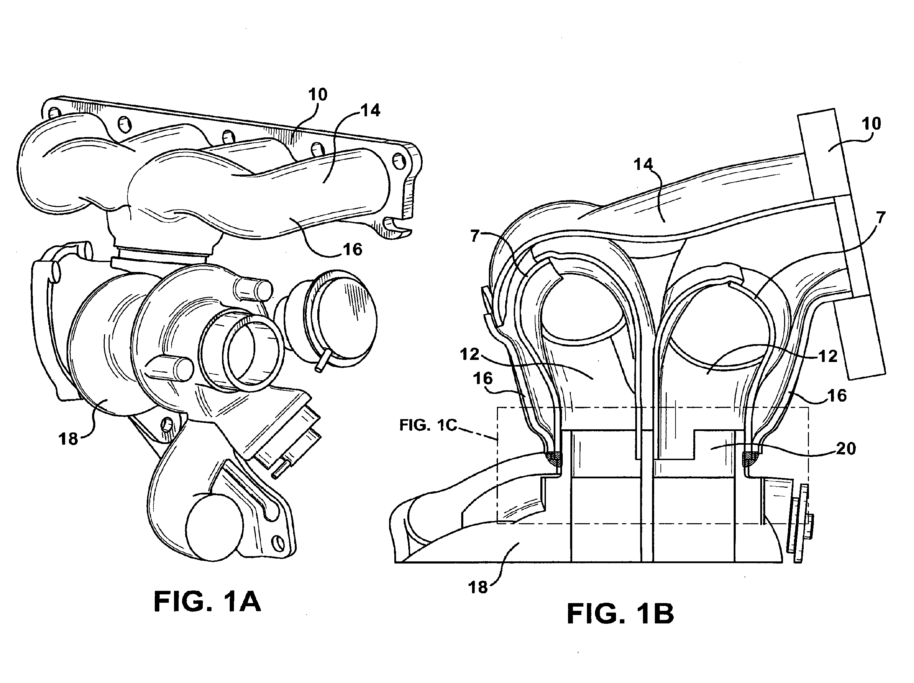

As illustrated in FIGS. 1A-1C, a first component 10 and a second component 18 are generally illustrated. The first component 10 and the second component 18 may be any components that require connection, such as by welding. In an embodiment, the first component 10 is a manifold assembly, and the second component 18 is a turbine housing. For explanation purposes only, the first component 10 will hereinafter be refereed to as the manifold assembly 10, and the second component 18 will be hereinafter referred to as the turbine housing 18. However, a person having ordinary skill in the art will appreciate that the first component 10 and the second component 18 may be other types of components.

The manifold assembly 10 may be incorporated into a combustion engine and/or a vehicle, for example. The turbine housing 18 may be incorporated into a turbocharger, for example. As is well known in the art, turbocharged engines may typically run at higher temperatures, pressures, loads, etc. The embodiments described herein provide innovative, durable, and better performing connections.

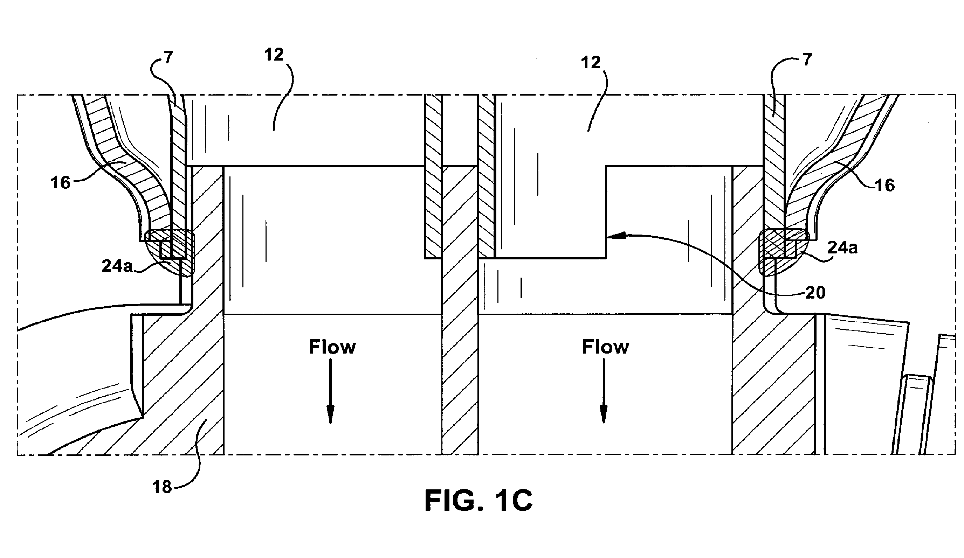

With reference to FIGS. 1A-1C, the manifold assembly 10 may be joined and secured to the turbine housing 18 with a joint 24a, as best shown in FIG. 1C. The manifold assembly 10 may comprise one or more insert members 7, a manifold upper shell 14, and a manifold lower shell 16. The manifold upper shell 14, the manifold lower shell 16 and/or the insert members 7 may form flow cavities 12. The insert members 7 may be formed by the contours of the manifold upper shell 14 and the manifold lower shell 16 or may be separate tubes inserted into or connected to the manifold assembly 10. However, it will be appreciated that the insert members 7 may be any shape and size, including tubular, ovular, half shell, or other arrangements or configurations.

The joint 24a may be a welded joint or may be formed of any material, substance or device to connect the manifold assembly 10 and the turbine housing 18. As shown in FIG. 1C, the joint 24a may secure the one or more of the insert members 7 to the manifold lower shell 16 and/or the manifold upper shell 14. In an embodiment, the insert members 7 may be welded at the joint 24a to the manifold lower shell 16 and/or the manifold upper shell 14. In such an embodiment, the manifold lower shell 16 and the manifold upper shell 14 may be welded along the joint 24a. The turbine housing 18 may be welded along the joint 24a to the manifold assembly 10. For example, the joint 24a may be formed around the manifold assembly, such as a full 360 degrees about the manifold assembly 10 and/or the turbine housing 18. In one example, the joint 24a may be formed by welding the insert members 7 to the manifold 10, then welding the manifold lower shell 16 to the manifold upper shell 14, and lastly welding the turbine housing 18 to the manifold assembly 10.

Notches 20 may be formed in one or more of the insert members 7 and/or the interior of the manifold assembly 10. The notches 20 may be slots, cut-outs, gaps or the like. The notches 20 may permit a portion of insert members 7 and/or the manifold assembly 10 to extend to the exterior of the turbine housing 18 so the joint 24a may be formed about the external side of the turbine housing 18. For example, a first portion of the insert members 7 may extend interior to the turbine housing 18 and a second portion of the insert members 7 near the notch 20 may extend to the exterior of the turbine housing 18. The exterior portion of the insert members 7 allows the joint 24a to connect the turbine housing 18, insert members 7, and lower shell 16 at a single connection point, such as a single weld joint.

The joint 24a as shown in FIGS. 1A-1C may be particularly beneficial when integrating a twin scroll turbo into a twin scroll manifold, as each of the flow cavities 12 may protrude inside of the turbine housing 18. Positioning a portion of the flow cavities 12 into the turbine housing 18 separately may prevent "cross-talk" or fluid communication between the flow cavities 12, which may improve a turbocharger's efficiency.

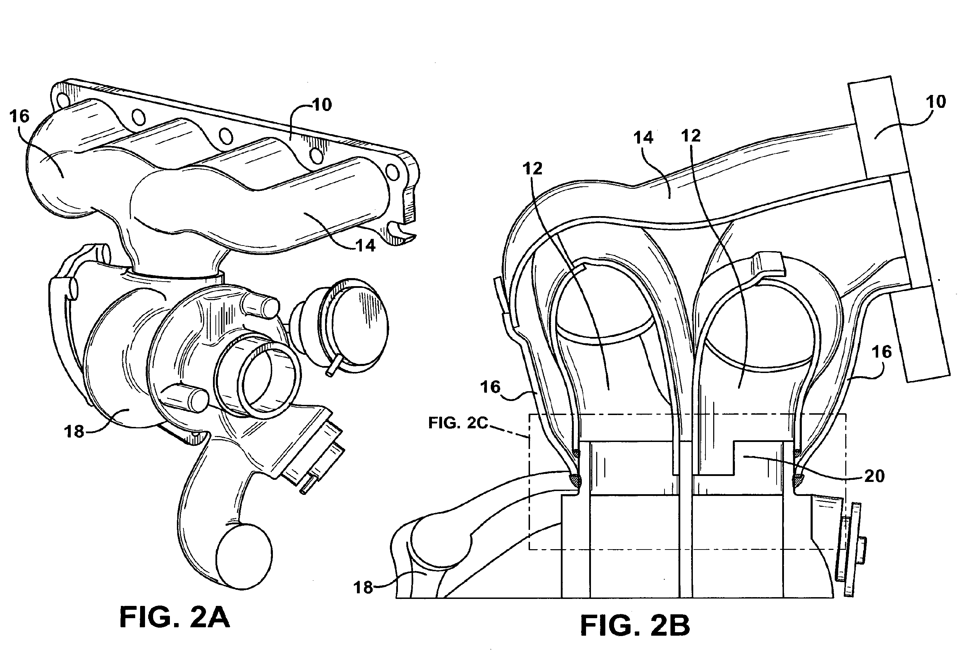

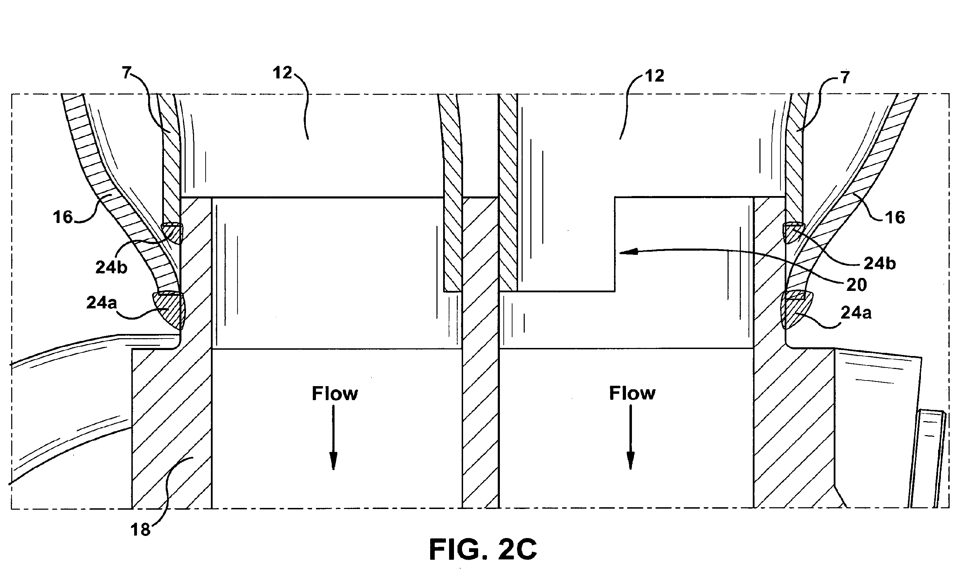

FIGS. 2A-2C illustrate another embodiment of the invention. The notch 20 may be provided in at least one of the insert members 7, as best shown in FIG. 2C. The notch 20 may permit a portion of the insert members 7 to be positioned external to the turbine housing 18. The insert members 7 may be secured to the turbine housing 18 along a joint 24b. The joint 24b is preferably a welded joint, but may be any substance or device for securing the insert members 7 to the turbine housing 18. The insert members 7 may be welded to and/or otherwise secured to the manifold lower shell 16 along the joint 24a. It should be appreciated that the insert members 7 may be secured to the manifold upper shell 14 instead of the manifold lower shell 16 or simultaneously welded to the manifold shells 14, 16. In an embodiment, the insert members 7 may be integrally formed with one of or both of the manifold shells 14, 16. The manifold upper shell 14 may be welded to or otherwise secured to the turbine housing 18 along the joint 24a.

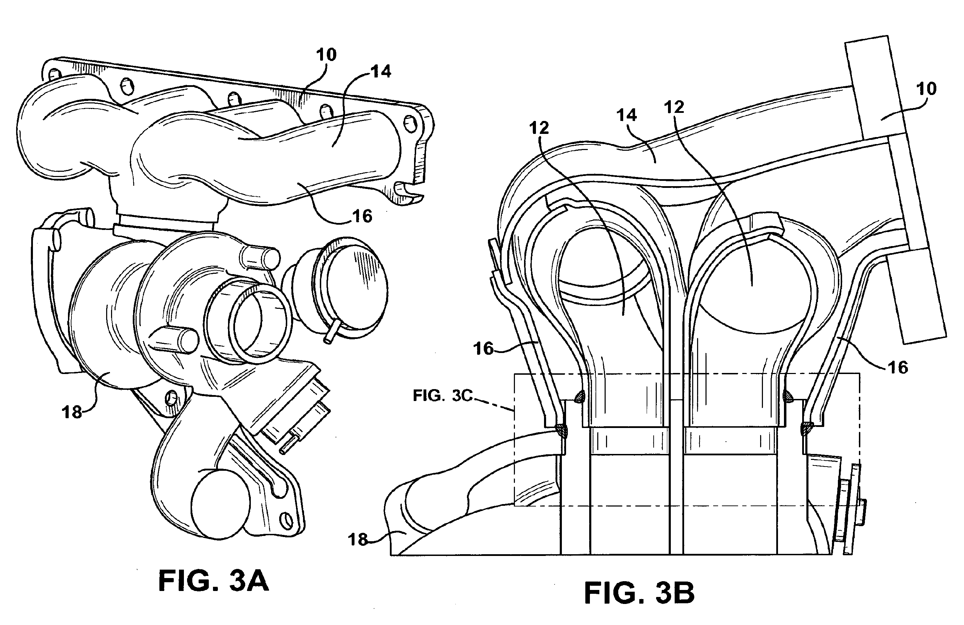

With reference to FIGS. 3A-3C, a third embodiment is illustrated. In the third embodiment, the inner flow cavities 12 may be substantially within or even completely within the turbine housing 18. In such an embodiment, one or more of the insert members 7 may be at least partially positioned or otherwise completely positioned within the turbine housing 18. For example, the insert members 7 may be inserted into the turbine housing 18 and contact or abut the shoulder 50 of the turbine housing 18. The shoulder 50 may permit the insert members 7 to be properly positioned within the turbine housing 18, such as at a predetermined distance within the turbine housing 18.

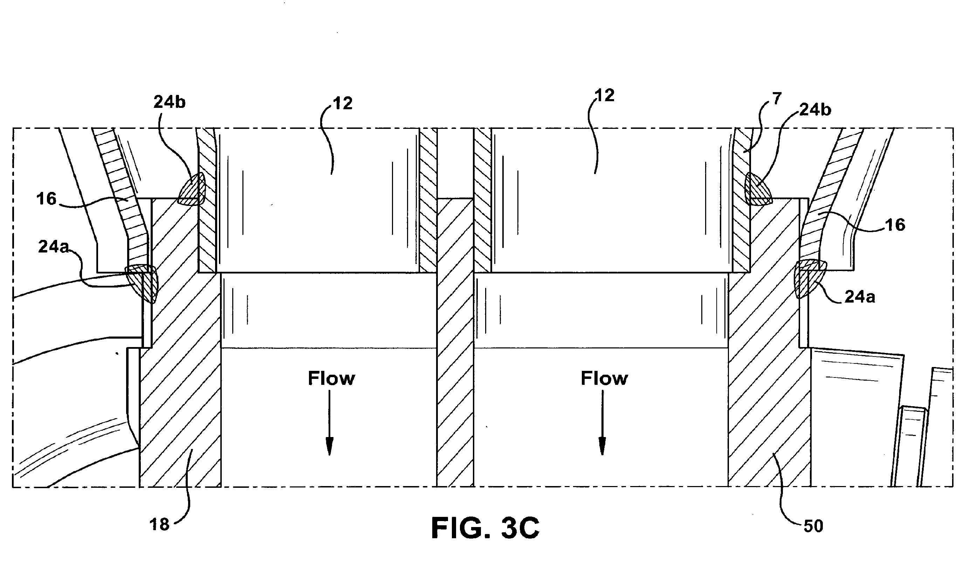

The one or more insert members 7 may be secured to the turbine housing 18 along the joint 24b, as best shown in FIG. 3C. The insert members 7 are preferably welded to the turbine housing 18 along the external surface of the insert members 7. The manifold lower shell 16 may be positioned on the external side/surface of the turbine housing 18 and secured along the joint 24a. The manifold upper shell 14 may be secured to the manifold lower shell 16 and/or the turbine housing 18 along the joint 24a. One of ordinary skill in the art will appreciate that the manifold upper shell 16 may be secured to the turbine housing 18 before, after or even simultaneously with the manifold lower shell 14.

In the embodiment of FIGS. 3A-3C, the manifold shells 14, 16 may be positioned a greater distance outward from the flow cavities 12 than in the embodiments shown in FIGS 1 and 2, for example. In the embodiments of FIGS. 2A-2C and FIGS. 3A-3C, the manifold shells 14, 16 may permit access to the flow cavities 12 prior to assembling the manifold assembly 10. For example, the embodiments of FIGS. 2A-2C and FIGS. 3A-3C may utilize a two-piece lower manifold shell 16. A person having ordinary skill in the art may appreciate that the manifold shells 14, 16 may be designed in numerous configurations for any of the embodiments of the invention.

In FIGS. 3A-3C, an example of a method for securing the manifold assembly 10 to the turbine housing 18 may be performed in the following sequence: (1) the insert members 7 may be welded or otherwise secured to the turbine housing 18 along the joint 24b; (2) the manifold upper shell 14 may be secured or welded to the manifold lower shell 16 and/or turbine housing 18 the along or adjacent to the joint 24a, and (3) the manifold lower shell 16 may be welded or otherwise secured to the turbine housing 18 along the joint 24a. A person having ordinary skill in the art will appreciate that the following steps may be performed in a different sequence, may include other steps, and/or may be accomplished without one or more of the steps. As a non-limiting example, the manifold lower shell 16 may only be partially secured to the turbine housing 18 if, for example, the manifold upper shell 14 and the turbine housing 18 have yet to be secured or welded together. The welding of the manifold upper shell 14 may involve welding over or completing the weld of the manifold lower shell 16 to the turbine housing 18.

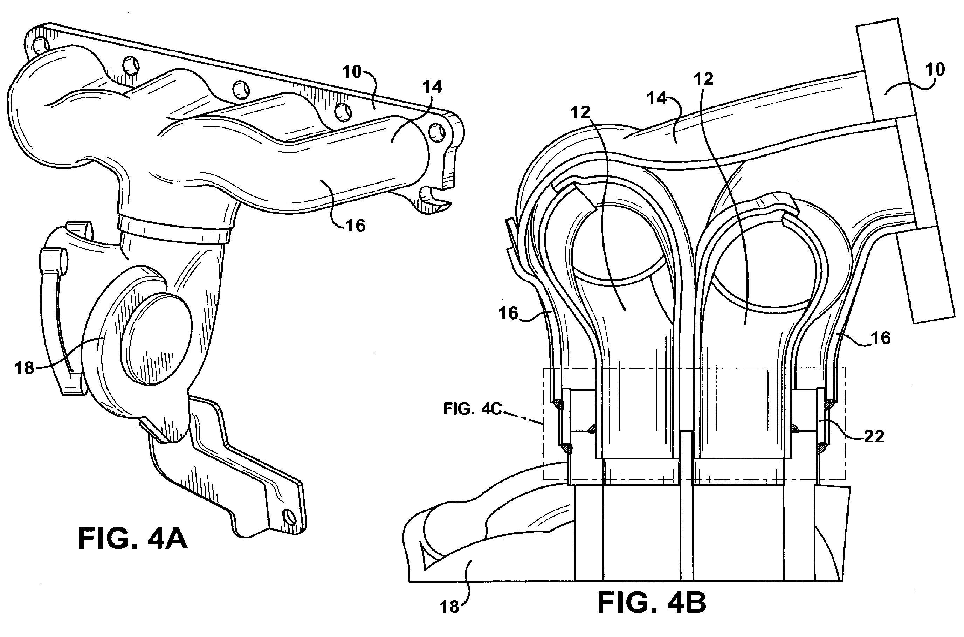

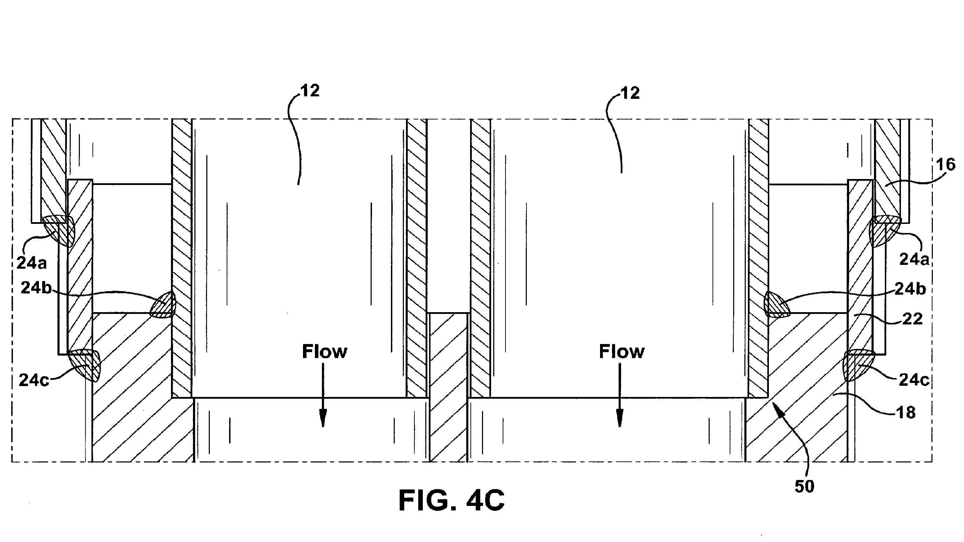

With reference to FIGS. 4A-4C, a fourth embodiment is illustrated. The fourth embodiment may utilize a floating tube 22 that may be secured to the manifold lower shell 16 and/or the turbine housing 18. The floating tube 22 may be any component that may permit connection of the turbine housing 18 to the manifold assembly 10 with minimal or no disruption of fluid flow between the manifold assembly 10 and the turbine housing 18. In an embodiment, the floating tube 22 may enclose or substantially enclose the flow cavities 12. The floating tube 22 may be welded to or otherwise secured to the manifold assembly 10 and the turbine housing 18 along the joints 24a, 24c, as best shown in FIG. 4C. In an embodiment the floating tube 22 may be positioned between the manifold lower shell 16 and the turbine housing 18.

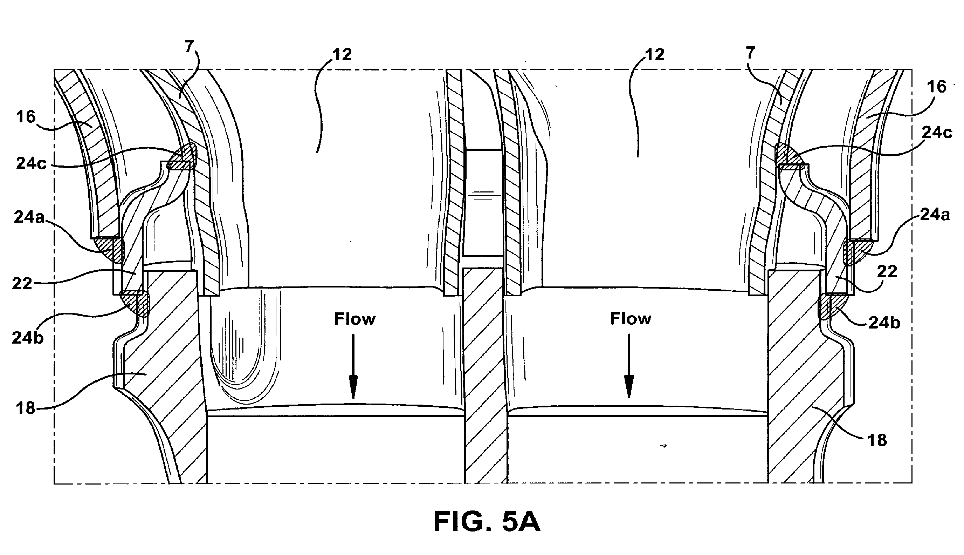

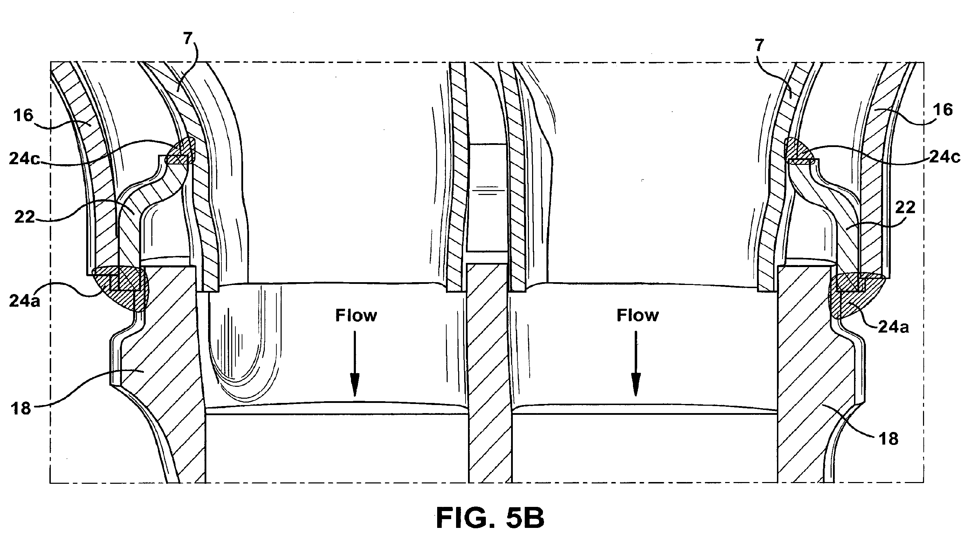

With reference to FIGS. 5A-5D, the floating tube 22 may be sized and shaped to secure the manifold lower shell 16 to the turbine housing 18 without direct welding to any inside surface of the turbine housing 18. Specifically, as best shown in FIG 5A, the floating tube 22 may be welded or otherwise secured to the insert members 7 at joint 24c, and to the turbine housing 18 at joint 24b. The manifold lower shell 16 may be welded or otherwise secured to the floating tube 22 at joint 24a. In one embodiment, illustrated in FIG 5B, the floating tube 22 and manifold lower shell 16 may be welded or secured to the turbine housing 18 together at a single joint, joint 24a.

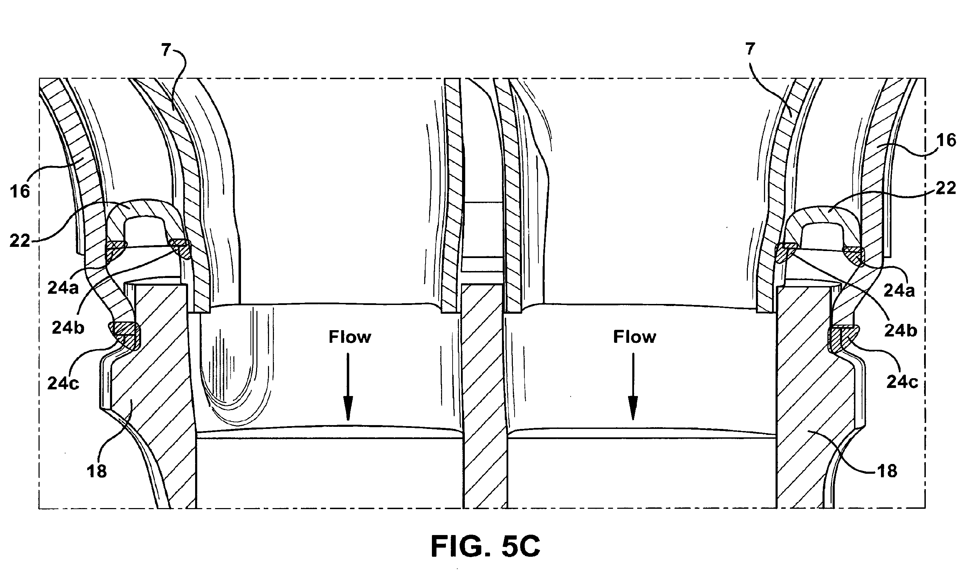

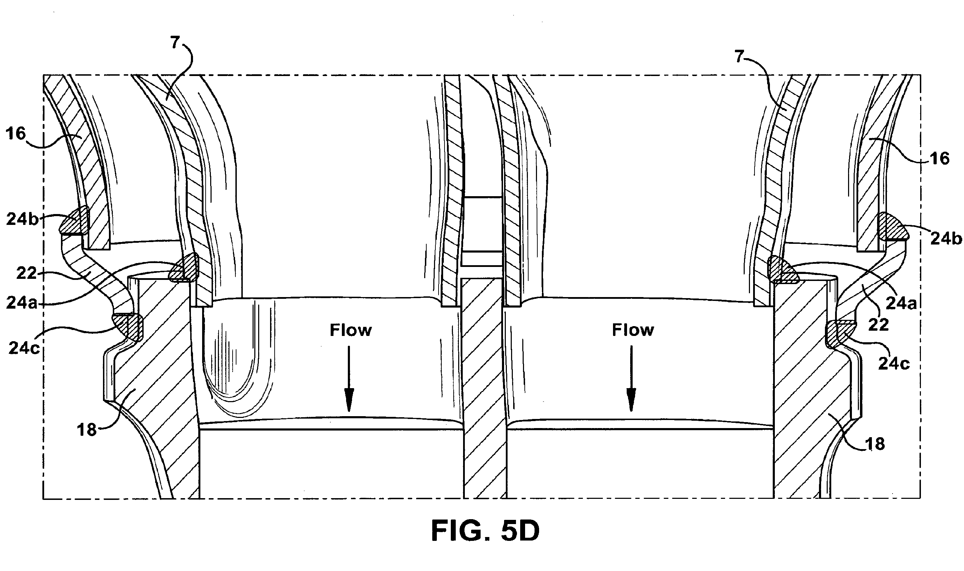

The floating tube 22 may be positioned either interior or exterior to the manifold lower shell 16. In one embodiment, illustrated in FIG 5C, a floating tube 22 may be welded or secured between the interior of the manifold lower shell 16 and the insert members 7 at joints 24a and 24b respectively. The manifold lower shell 16 may be welded to the turbine housing 18 at joint 24c. Alternatively, as shown in FIG 5D, the insert members 7 may be welded or otherwise secured to the turbine housing 18 at joint 24a. The floating tube 22 may then be welded or secured to the exterior of the manifold lower shell 16 at joint 24b, and to the exterior of the turbine housing 18 at joint 24c.

The insert members 7 may be positioned at least partially within the turbine housing 18 and may be inserted until contacting the shoulder 50. The insert members 7 may be secured to, such as by welding, to the turbine housing 18 along the joint 24b. In an embodiment, the joint 24b is only a partial weld to properly position the manifold assembly with respect to the turbine housing 18. The floating tube 22 may be inserted into the manifold assembly 10 (or the turbine housing 18) to allow access to the joint 24b. The floating tube 22 may be pulled or otherwise positioned so the floating tube 22 may be secured to the turbine housing 18 and the manifold lower shell 16. For example, the floating tube 22 may be pulled or otherwise moved partially out of the manifold lower shell 16. The manifold shells 14, 16 may be secured or welded together by the joint 24a, and the floating tube 22 may also be secured to the manifold shells 14, 16 by the joint 24a.

The floating tube 22 and then the turbine housing 18 may be secured or welded together along the joint 24c. In this embodiment, the joints 24a, 24c may be consistently about the entire assembly, such ass 360 degrees. The embodiment shown in FIGS. 4A-4C may be accomplished in numerous sequences. One example includes securing the insert members 7 to the turbine housing 18 prior to securing the floating tube 22 and the manifold shells 14, 16 to the turbine housing 18. A person of ordinary skill in the art will appreciate many sequences of accomplishing the invention.

The invention may solve assembly issues for the part that they are designed into. For example, the floating tube 22 may allow access to the manifold shells 14, 16 for welding, for example. Such a design may increase design flexibility, for example by simplifying the assembly process, and may even allow certain designs to become manufacturable when they previously were not possible or cost effective. In addition, each of the above embodiments may also include slight variations within themselves, such as possible counter bores and chamfers for flow, sealing, and the like.

## Claims

1. A manifold to housing connection comprising:
a manifold (16);
a tube member (22) positioned between said manifold (16) and a housing (18);
a first joint (24b) connecting said tube member (22) to an exterior surface of said housing (18); and
a second joint (24a) connecting said manifold (16) to an exterior surface of said tube member (22);
an insert member (7) positioned at least partially within said housing; and
a third joint (24c) connecting said tube member (22) to an exterior surface of said insert member (7).

2. The manifold to housing connection of claim 1, wherein said first and second joints (24b, 24a) are welded joints.

3. The manifold to housing connection of claim 2, wherein said first and second welded joints (24b, 24a) are formed around the perimeter of said tube member (22).

4. The manifold to housing connection of any of claims 1 to 3, wherein said manifold (16) is an exhaust manifold.

5. The manifold to housing connection of claim 4, wherein said exhaust manifold (16) is a twin scroll manifold.

6. The manifold to housing connection of claim 4 or 5, wherein said exhaust manifold comprises an upper portion (14) and a lower portion (16).

7. The manifold to housing connection of claim 1, wherein said first joint (24b) and said second joint (24a) are integrated.

## Patentansprüche

1. Anschluss zwischen Krümmer und Gehäuse, der umfasst:
einen Krümmer (16);
ein Rohrelement (22), das zwischen dem Krümmer (16) und einem Gehäuse (18) positioniert ist;
ein erstes Verbindungsstück (24b), das das Rohrelement (22) mit einer Außenoberfläche des Gehäuses (18) verbindet; und
ein zweites Verbindungsstück (24a), das den Krümmer (16) mit einer Außenfläche des Rohrelements (22) verbindet;
ein Einsatzelement (7), das wenigstens teilweise in dem Gehäuse positioniert ist; und
ein drittes Verbindungsstück (24c), das das Rohrelement (22) mit einer Außenfläche des Einsatzelements (7) verbindet.

2. Anschluss zwischen Krümmer und Gehäuse nach Anspruch 1, wobei die ersten und zweiten Verbindungsstücke (24b, 24a) verschweißte Verbindungsstücke sind.

3. Anschluss zwischen Krümmer und Gehäuse nach Anspruch 2, wobei die ersten und zweiten verschweißten Verbindungsstücke (24b, 24a) um den Umfang des Rohrelements (22) herum ausgebildet sind.

4. Anschluss zwischen Krümmer und Gehäuse nach einem der Ansprüche 1 bis 3, wobei der Krümmer (16) ein Abgaskrümmer ist.

5. Anschluss zwischen Krümmer und Gehäuse nach Anspruch 4, wobei der Abgaskrümmer (16) ein Twinscroll-Krümmer ist.

6. Anschluss zwischen Krümmer und Gehäuse nach Anspruch 4 oder 5, wobei der Abgaskrümmer einen oberen Abschnitt (14) und einen unteren Abschnitt (16) umfasst.

7. Anschluss zwischen Krümmer und Gehäuse nach Anspruch 1, wobei das erste Verbindungsstück (24b) und das zweite Verbindungsstück (24a) integriert sind.

## Revendications

1. Connexion de collecteur à logement comprenant :
un collecteur (16) ;
un élément de tube (22) positionné entre ledit collecteur (16) et un logement (18) ;
un premier joint (24b) connectant ledit élément de tube (22) à une surface extérieure dudit logement (18) ; et
un deuxième joint (24a) connectant ledit collecteur (16) à une surface extérieure dudit élément de tube (22) ;
un élément d'insertion (7) positionné au moins partiellement au sein dudit logement ; et
un troisième joint (24c) connectant ledit élément de tube (22) à une surface extérieure dudit élément d'insertion (7).

2. Connexion de collecteur à logement selon la revendication 1, dans laquelle lesdits premier et deuxième joints (24b, 24a) sont des joints soudés.

3. Connexion de collecteur à logement selon la revendication 2, dans laquelle lesdits premier et deuxième joints soudés (24b, 24a) sont formés autour du périmètre dudit élément de tube (22).

4. Connexion de collecteur à logement selon l'une quelconque des revendications 1 à 3, dans laquelle ledit collecteur (16) est un collecteur d'échappement.

5. Connexion de collecteur à logement selon la revendication 4, dans laquelle ledit collecteur d'échappement (16) est un collecteur à double spirale.

6. Connexion de collecteur à logement selon la revendication 4 ou 5, dans laquelle ledit collecteur d'échappement comprend une portion supérieure (14) et une portion inférieure (16).

7. Connexion de collecteur à logement selon la revendication 1, dans laquelle ledit premier joint (24b) et ledit deuxième joint (24a) sont intégrés.
